Europäisches Patentamt

European Patent Office

Office européen des brevets

(11) Publication number: **0 342 893**
A1

# (12) EUROPEAN PATENT APPLICATION

(21) Application number: **89304880.1**

(22) Date of filing: **15.05.89**

(51) Int. Cl.⁴: **F02B 25/24 , F02B 25/28**

(30) Priority: **17.05.88 GB 8811636**

(43) Date of publication of application:
**23.11.89 Bulletin 89/47**

(84) Designated Contracting States:
**AT BE CH DE ES FR GB GR IT LI LU NL SE**

(71) Applicant: **GROUP LOTUS PLC**
**Hethel**
**Norwich Norfolk NR14 8EZ(GB)**

(72) Inventor: **Lipman, John Michael**
**The Meadow Low Road Forncett St Mary**
**Norwich Norfolk NR16 1JJ(GB)**

(74) Representative: **Jones, Ian et al**
**POLLAK MERCER & TENCH High Holborn**
**House 52-54 High Holborn**
**London WC1V 6RY(GB)**

(54) **Internal combustion engine.**

(57) A two-stroke internal combustion engine has two
cylinders (2) in V-configuration with a blower (20)
supplying air to the cylinders through a hollow rotary
valve (16) constituting part of an air intake manifold.
Inlet ports (11) in the cylinder walls extend in the
axial direction beyond exhaust ports (12) so that air
enters the cylinders after closure of the exhaust
ports on the piston upstroke. The rotary valve pre-
vents entry of exhaust gases into the intake manifold
during piston downstroke.

EP 0 342 893 A1

# INTERNAL COMBUSTION ENGINE

The invention relates to an internal combustion (i.c.) engine of the two-stroke type.

I.c. engines operating on a two-stroke cycle are well known and have both advantages and disadvantages compared with four-stroke engines. The present invention is concerned with the provision of a two-stroke i.c. engine capable of improved efficiency and reduced noise.

The invention accordingly provides a two-stroke engine having an inlet port to the or each cylinder which is opened and closed by the piston as it moves within the cylinder, the inlet port being additionally controlled by valve means.

The air supply to the inlet port by way of the valve is preferably pressurized and the position of the inlet port and the timing of the operation of the vale are such that the valve prevents entry of exhaust gases into air supply during the downstroke after firing or ignition until the pressurized air can scavenge the cylinder by way of an exhaust port preferably also formed in the cylinder wall so as to be opened and closed by the piston. The scavenging air thus cools the piston top and cylinder head and permits a high compression ratio to be used.

The port positions and valve operation are also preferably such that on the upstroke the exhaust port is closed before the inlet port so that pressurized air can enter the cylinder right up until shortly before the fuel enters the cylinder for injection.

The valve between the engine air inlet or blower and the inlet port or ports is conveniently constituted as a rotary valve, and its interior may carry the air supply, so functioning as a manifold in a multi-cylinder engine. The valve is in any event preferably driven through a variable drive so that performance can be optimised.

The location of the ports in the piston side wall allows optimum shaping of the cylinder head and positioning of the spark plug. Noise and mechanical complications are reduced by the absence of reciprocating valves and the associated drive systems. High volumetric efficiency can be obtained by use of a blower or compressor for the air supply together with relatively large area ports. The invention can thus be embodied in a two-stroke i.c. engine which has maximized advantages over a comparable four-stroke engine.

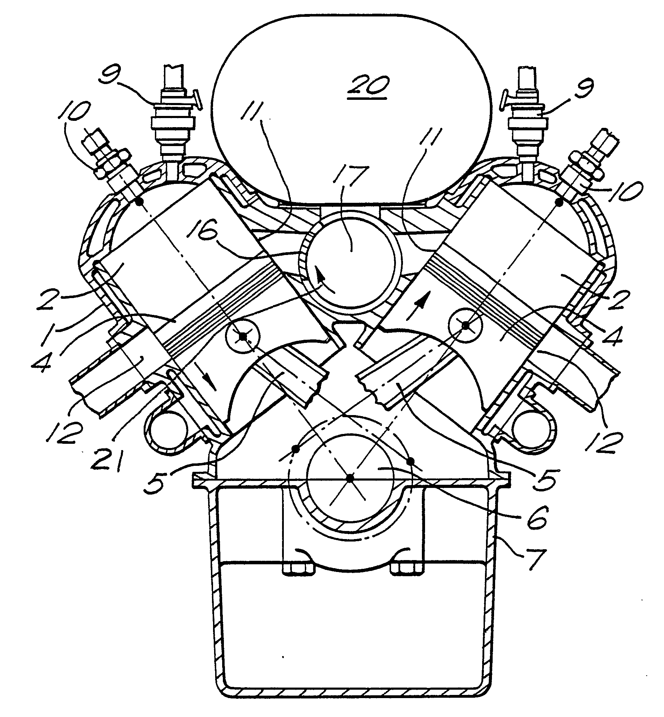

The invention is further described below, by way of example, with reference to the accompanying drawing, the single figure of which is a part-schematic sectional end view of a two-cylinder two-stroke internal combustion engine in which the invention is embodied.

The illustrated engine comprises a cylinder block 1 providing two cylinders 2 in V configuration, each cylinder containing a piston 4 connected by a connecting rod 5 to a crankshaft 6 received in a crankcase 7 below the cylinder housing. At the end of each cylinder there is provided a fuel injection nozzle 9 and a spark plug 10.

Each cylinder side wall is formed with an air inlet port 11 and an exhaust port 12, both positioned to be opened and closed by the associated piston 4. It will be seen that the inlet and exhaust ports 11 and 12 are diametrically opposed across the cylinder and extend towards the cylinder head from substantially the same position in the direction axially of the cylinder 2 and that the inlet port extends beyond the exhaust port in this direction. The air inlet ports 11 communicate by aligned passages with a single, centrally positioned, rotary valve 16, and the exhaust ports communicate with an exhaust manifold (not shown). The interior of the valve 16 functions as an air inlet manifold 17, to which pressurized air is supplied by a blower 20 positioned centrally above the manifold, between the two cylinders 2.

The operation of the engine is now described by reference first to the cylinder 2 at the left-hand side of the figure, in which the piston 4 is shown in its downward stroke, with exhaust gases in the cylinder above it. The positions of the inlet and exhaust ports are such that opening of the inlet port 11 begins first, to be closely followed by opening of the exhaust port 12. The rotary valve 16 is closed but is just beginning to open, by rotation in the direction of the arrow 21. The valve 16 remains closed as long as is needed to prevent communication between the cylinder and the air inlet manifold 17 before opening of the exhaust port, so exhaust gas cannot enter the inlet system.

By the time that both the inlet and exhaust ports 11 and 12 are fully open, the valve 16 too is open, so as to allow scavenging air to enter and purge the cylinder.

Referring now to the cylinder 2 shown at the right-hand side of the figure, the piston 4 is shown on the return stroke, moving upwardly from the lowermost position. The piston accordingly begins to close off both ports 11 and 12, but in the position illustrated the inlet port 11 remains partially open after the exhaust port 12 has been closed, with the valve 16 open. The cylinder is thus supplied with pressurized air until the inlet port is completely closed, after which appropriately timed fuel injection and ignition take place. The valve 16 has meanwhile turned to close off the passage between the manifold 17 and the inlet port 11. After ignition of the fuel mixture in the cylinder, the piston 4 of course descends and the operation is as described above with reference to the left-hand cylinder 2.

The coaxial rotary valve 16 can be driven from the crankshaft 6 in a fixed predetermined relationship, but could instead be variably driven, so as to permit timing adjustments appropriate to optimised performance. Although described above with reference to a two cylinder engine, the invention is not limited as to the number of cylinders of engines in which it is embodied.

Also, an engine embodying the invention need not be of the spark ignition type, but may operate on compression ignition, in the manner of a Diesel engine.

The invention thus can be embodied in a variety of ways other than as specifically illustrated and described.

## Claims

1. A two-stroke internal combustion engine comprising at least one cylinder (2) having a piston (4) movable therein through a cycle comprising a downstroke and an upstroke, inlet means (11,16,17) for supply of air into the cylinder, and exhaust means (12) for discharge of exhaust gases from the cylinder, the inlet and exhaust means permitting inflow of air during the upstroke after closure of the exhaust means and preventing discharge of exhaust gases through the inlet means during the downstroke.

2. An engine as claimed in claim 1 wherein the inlet means comprises an inlet port (11) in the sidewall of the cylinder at a position to be opened and closed by the piston (12) and a valve (16) preventing discharge of exhaust gases through the inlet port during downstroke until the exhaust means (12) is opened.

3. An engine as claimed in claim 2 wherein the exhaust means comprises an exhaust port (12) in the cylinder wall, the exhaust port being located generally opposite the inlet port (11).

4. An engine as claimed in claim 2 or 3 wherein the valve is a rotary valve (16).

5. An engine as claimed in claim 4 wherein the rotary valve (16) is hollow, the interior thereof providing an air inlet duct (17).

6. An engine as claimed in claim 4 or 5 wherein the rotary valve (16) is driven from the engine crankshaft (6) by way of adjustable drive means.

7. An engine as claimed in claim 4, 5 or 6 having at least one pair of the cylinders (2) positioned to extend in V-formation, the rotary valve (16) being located between the cylinders and arranged to close the inlet ducts (11) of the cylinders in sequence.

8. An engine as claimed in any preceding claim having a compressor (20) for supplying air to the inlet means under pressure.

European Patent Office

EUROPEAN SEARCH REPORT

Application Number

EP 89 30 4880

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A- 940 278 (GADOUX)<br>* page 2, line 40 - page 3, line 12; figures 1,2 * | 1,8 | F 02 B 25/24<br>F 02 B 25/28 |
| A | | 4-6 | |
| X | GB-A- 321 514 (CURTIS et al.)<br>* page 5, lines 8-119; figures 18,20 * | 1-3,8 | |
| X | DE-A-2 808 138 (BRETSCHNEIDER)<br>* page 5, line 23 - page 11, line 34; figures 1-3 * | 1-6,8 | |
| X | US-A-2 113 979 (BOKEMUELLER)<br>* page 1, line 14 - page 2, line 51; figures 1-3 * | 1-6,8 | |
| X | DE-A-2 107 227 (MUELLER)<br>* page 4, line 5 - page 6, line 24; page 10, lines 3-10; figures 5,6 * | 1-8 | |
| X | US-A-4 527 516 (FOSTER)<br>* column 4, line 53 - column 5, line 8; column 7, lines 46-60; figures 1,7 * | 1,8 | TECHNICAL FIELDS SEARCHED (Int. Cl.4) |
| A | | 7 | F 02 B |

The present search report has been drawn up for all claims

| Place of search | Date of completion of the search | Examiner |
|---|---|---|
| BERLIN | 31-07-1989 | NORDSTROEM U.L.N. |